# EUROPÄISCHE PATENTSCHRIFT

(11) **EP 0 764 906 B1**
(45) Veröffentlichungstag und Bekanntmachung des Hinweises auf die Patenterteilung: **02.08.2006**
(21) Anmeldenummer: 96113853.4
(22) Anmeldetag: 29.08.1996
(51) Int. Cl.: G06F 13/24, G06F 9/46

(54) **Verfahren zum Betreiben eines durch ein Realzeit-Betriebssystem gesteuerten Realzeit-Computersystems**
Method of operating a real time computer system controlled by a real time operating system
Procédé de fonctionnement d'un système d'ordinateur en temps réel commandé par un système d'exploitation en temps réel

(30) Priorität: 25.09.1995 DE 19535546
(43) Veröffentlichungstag der Anmeldung: 26.03.1997
(73) Patentinhaber: SIEMENS AKTIENGESELLSCHAFT, 80333 München (DE)
(72) Erfinder: Blank, Felix, Dipl.inf., 81241 München (DE); Wiesinger, Ursula, Dipl.Inf., 81479 München (DE); Schicklinski, Peter, Dipl.Math., 81477 München (DE); Sterr, Bettina, 81377 München (DE)

(56) Entgegenhaltungen:
- EP-A- 0 594 377
- US-A- 4 517 643
- US-A- 5 161 226
- PATENT ABSTRACTS OF JAPAN vol. 018, no. 129 (P-1703), 3. März 1994 & JP 05 313916 A (FUJITSU LTD;OTHERS: 01), 26. November 1993
- PATENT ABSTRACTS OF JAPAN vol. 014, no. 372 (P-1091), 10. August 1990 & JP 02 138632 A (FUJITSU LTD), 28. Mai 1990
- "TECHNIQUE TO IMPROVE CONTEXT SWITCHING PERFORMANCE IN A CPU" IBM TECHNICAL DISCLOSURE BULLETIN, Bd. 33, Nr. 3B, 1. August 1990, Seite 472/473 XP000124425

## Beschreibung

Die Erfindung betrifft ein Verfahren zum Betreiben eines durch ein Realzeit-Betriebssystem gesteuerten Realzeit-Computersystems, welches Interruptsignale eines technischen Prozesses verarbeitet.

Derartige Verfahren werden z.B. in Realzeit-Computersystemen eingesetzt, die in Telekommunikationsbaugruppen der öffentlichen und privaten Netze verwendet werden. Ein Realzeit-Computersystem ist dadurch gekennzeichnet, daß das Abarbeiten eines beispielsweise als Reaktion auf ein Interruptsignal aktivierten Programms innerhalb einer bekannten begrenzten Zeitspanne unterbrochen werden kann, um das Abarbeiten dieses Programms erst dann fortzusetzen, wenn Programme mit höherer Priorität abgearbeitet worden sind. Während des Abarbeitens eines Programmes in Telekommunikationsbaugruppen können z.B. ca. bis zu 50 000 Interruptsignale pro Sekunde auftreten, die jeweils ein Unterbrechen eines gerade abzuarbeitenden Programmes und das Reagieren auf die Interruptsignale erforderlich machen.

Bekannte Realzeit-Computersysteme sperren die Annahme weiterer Interruptsignale für eine bestimmte Zeitspanne, die im folgenden Interruptsperrzeit genannt wird, so daß die in dieser Zeitspanne ankommenden Interruptsignale nicht berücksichtigt werden, und Informationen verloren gehen können. Die Interruptsperrzeit ist erforderlich, damit der Mikroprozessor durch Abarbeiten einer Interruptroutine seine Register sichern, auf das Interruptsignal zumindest teilweise reagieren und letztlich die Register wieder aktualisieren kann, um das unterbrochene Programm fortsetzen zu können. Je länger diese Interruptsperrzeit ist, um so mehr ankommende Interruptsignale bleiben unberücksichtigt. Vorteilhaft wäre ein verbessertes Verfahren zum Betreiben eines Realzeit-Computersystems, bei dem die Interruptsperrzeit vermindert ist.

Aus dem Abschnitt Seite 693 bis 697 der Druckschrift "The Art of Electronics, 2nd Edition", veröffentlicht 1989 bei Horowitz&Hill (Cambridge University Press - ISBN: 0 521 37095 7) ist eine Interrupt-Behandlung für an einen Arbeitsplatzrechner angeschlossene Peripherie-Geräte bekannt, bei der Verfahrensschitte in einem zu unterbrechenden, auf dem Arbeitsplatzrechner ablaufenden Programm und Verfahrensschitte einer Interrupt-Routine offenbart sind. Hierbei werden insbesondere die Registrierung der Interrupt-Routine bei dem Programm und eine beispielhafte Implementierung der Interrupt-Routine erläutert und darüber hinaus die Problematik einer langen Interruptsperrzeit erwähnt. Ein dabei genannte Lösungsvorschlag beschäftigt sich mit dem Freigeben des Interrupts innerhalb der Interrupt-Routine.

Aufgabe der Erfindung ist es, eine zusätzliche Realzeit-Betriebssystem-Komponente zu entwickeln, welche es gestattet, eine möglichst große Zahl auftretender Interruptsignale je Zeiteinheit zu erfassen und darauf zu reagieren.

Diese Aufgabe wird durch die folgenden Verfahrensschritte gelöst: Beim Auftreten eines Interruptsignals unterbricht das Realzeit-Computersystem ein gerade abzuarbeitendes Programm; die Annahme weiterer Interruptsignale wird gesperrt und eine zu diesem Interruptsignal gehörende Interruptroutine wird aufgerufen; beim Abarbeiten dieser Interruptroutine wird ein erster Teil der Programmparameter des beim Auftreten des Interruptsignals unterbrochenen Programms zwischengespeichert; in einem Interruptspeicher wird zumindest ein Datum über das Interruptsignal abgespeichert; aus der Interruptroutine wird zu einer Interruptverwaltungsroutine verzweigt, wobei beim Abarbeiten der Interruptverwaltungsroutine die Annahme weiterer Interruptsignale wieder freigegeben wird; beim Abarbeiten der Interruptverwaltungsroutine wird das zu dem Interruptsignal gehörende Datum im Interruptspeicher gelöscht; der verbliebene Teil der Programmparameter des beim Auftreten des Interruptsignals unterbrochenen Programms wird zwischengespeichert; abhängig vom Datum über das Interruptsignal im Interruptspeicher wird mindestens eine zu diesem Interruptsignal gehörende Reaktionsroutine aktiviert und gegebenenfalls unter Einschaltung des Realzeit-Betriebssystems abgearbeitet; nach dem Abarbeiten der Interruptverwaltungsroutine verzweigt das Realzeit-Betriebssystem unter Verwendung der zwischengespeicherten Programmparameter zu dem beim Auftreten des Interruptsignals unterbrochenen Programm zurück.

Die Erfindung geht von der Überlegung aus, daß ein Verkürzen der Interruptsperrzeit dazu beiträgt, daß eine möglichst große Zahl von Interruptsignalen verarbeitet werden kann. Die Interruptsperrzeit kann dann verkürzt werden, wenn bisher notwendige Befehlsabläufe aus einer Interruptroutine, die bei bekannten Verfahren in die Interruptsperrzeit fallen, ausgelagert werden. Die Erfindung sieht eine Interruptverwaltungsroutine für zu den einzelnen Interruptroutinen gehörende Reaktionsroutinen vor, in die jeweils die Aktionen zum Bearbeiten des Interruptsignals aus den zugehörigen Interruptroutinen ausgelagert werden, die nicht unbedingt sofort beim Auftreten des Interruptsignals ausgeführt werden müssen. Zu diesen Aktionen gehört z.B. das Sichern eines Teils der Registerdaten des Mikroprozessors, der Großteil der bisher in der Interruptroutine durchgeführten Schritte zur Reaktion auf das Interruptsignal und das Wiederherstellen des Teils der Registerdaten des Mikroprozessors, der nicht sofort beim Auftreten des Interruptsignals gesichert werden mußte.

Der Teil der Registerdaten des Mikroprozessors, der beim Auftreten des Interruptsignals sofort gesichert werden muß, wird im folgenden erster Teil der Programmparameter (Kontext I) des beim Auftreten des Interruptsignals unterbrochenen Programms genannt und kann z.B. der Inhalt des Flag-Registers des Mikroprozessors sein. Die restlichen zu sichernden Daten werden verbliebener Teil der Programmparameter (Kontext II und III) des beim Auftreten des Interruptsignals unterbrochenen Programms genannt.

Da beim Abarbeiten der Interruptverwaltungsroutine die Annahme weiterer Interruptsignale wieder freigegeben wird, ist im Gegensatz zu bekannten Verfahren die Interruptsperrzeit wesentlich verkürzt. Damit gehen folglich auch weniger Interruptsignale sowie beim Auftreten der Interruptsignale nur kurzzeitig zur Verfügung stehende Daten verloren.

Eine vorteilhafte Ausgestaltung des Verfahrens nach der Erfindung besteht darin, daß die Freigabe der Annahme weiterer Interruptsignale zu Beginn der Interruptverwaltungsroutine erfolgt. Durch eine möglichst frühe Freigabe der Annahme weiterer Interruptsignale wird erreicht, daß die Interruptsperrzeit nur durch eine unbedingt notwendige Zeitspanne bestimmt wird und somit maximal verkürzt wird.

Eine bevorzugte Ausführungsform der Erfindung besteht darin, daß das Speichern des verbliebenen Teils der Programmparameter (Kontext II) des beim Auftreten des Interruptsignals unterbrochenen Programms teilweise in einem dem unterbrochenen Programm zugeordneten ersten Stapelspeicher für Programmparameter und teilweise in einem der Interruptverwaltungsroutine zugeordneten zweiten Stapelspeicher für Programmparameter (Kontext III) zwischengespeichert werden. Durch diese Maßnahme wird erreicht, daß Speicherplatz eingespart werden kann, da die im zweiten Stapelspeicher gespeicherten Programmparameter nicht extra für jedes unterbrochene Programm abgespeichert werden müssen.

Ein Ausführungsbeispiel mit weiteren zweckmäßigen Ausgestaltungen der Erfindung wird im folgenden anhand der Zeichnungen erläutert. Dabei zeigen:
- Figur 1: ein Flußdiagramm der Verfahrensschritte beim Auftreten eines Interruptsignals und
- Figuren 2a, 2b, 2c: ein Flußdiagramm der im Rahmen des Abarbeitens der Interruptverwaltungs-routine ausgeführten Verfahrensschritte.

In den Figuren sind die Verfahrensschritte, bei denen die Annahme von Interruptsignalen gesperrt ist, durch Doppelpfeile bezeichnet. Einfache Pfeile kennzeichnen hingegen Verfahrensabschnitte, in denen die Annahme weiterer Interruptsignale freigegeben ist.

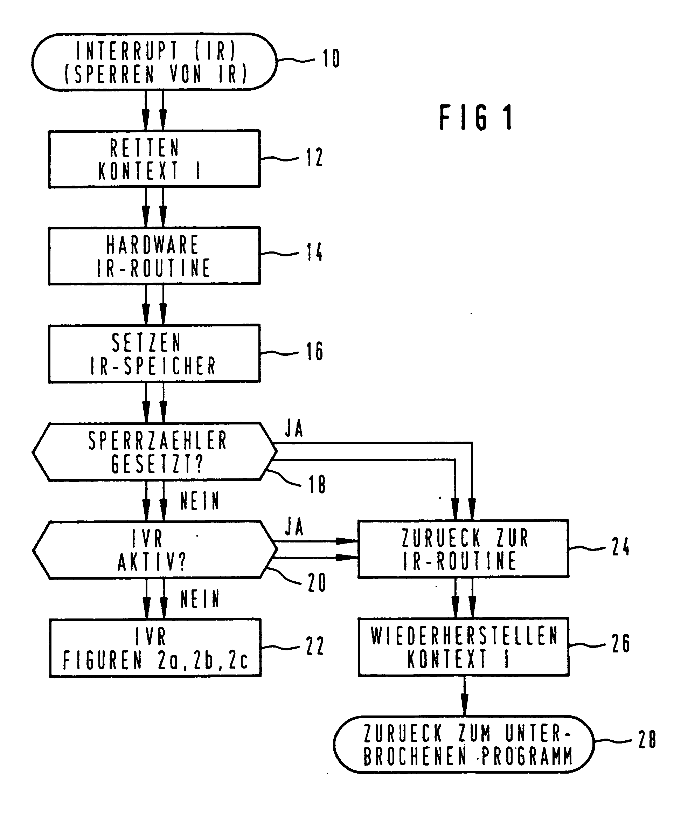

Figur 1 zeigt ein Flußdiagramm der Verfahrensschritte nach der Erfindung bei Auftreten eines Interruptsignals (Schritt 10). Unmittelbar nach Auftreten des Interruptsignals wird die Annahme weiterer Interruptsignale durch das Realzeit-Computersystem gesperrt. Damit der Mikroprozessor nach dem Unterbrechen durch das Interruptsignal das Abarbeiten des unterbrochenen Programms zu einem späteren Zeitpunkt fortsetzen kann, muß der Zustand seiner Register gespeichert werden, bevor weitere Verfahrensschritte zum Bearbeiten des aufgetretenen Interruptsignales durchgeführt werden. Wie bereits erwähnt, wird als Kontext I derjenige Teil der Programmparameter des beim Auftreten des Interruptsignales unterbrochenen Programms bezeichnet, der unmittelbar nach dem Auftreten des Interruptes gespeichert oder gerettet werden muß. Dieses Retten erfolgt unter Wirksamkeit einer Interruptsperre (Schritt 12), wobei die Programmparameter in einem Stapelspeicher in vorgegebener Reihenfolge abgespeichert werden.

Nachdem der Mikroprozessor nach dem Retten der Registerdaten nun wieder die Registerinhalte verändern darf, kann er die Annahme des Interruptsignals anderen Bestandteilen des Realzeit-Computersystemes, wie z.B. Schaltkreisen zur Interruptannahme, bestätigen (Schritt 14). Die Verfahrensschritte 12 und 14 werden bei bekannten Verfahren innerhalb der Interruptroutine durchgeführt und sollen infolgedessen auch hier als Bestandteile einer Interruptroutine angesehen werden.

Um das Interruptsignal später bearbeiten zu können, speichert der Mikroprozessor in einem Interruptspeicher ein auf das Interruptsignal verweisendes Datum ab (Schritt 16). Dieser Interruptspeicher kann z.B. eine mehrere zu einem Speicherwort zusammengefaßte Bits aufweisende Speicherzelle sein, in der je nach Art des auftretenden Interruptsignals ein bestimmtes Bit gesetzt wird, so daß später feststellbar ist, welches Interruptsignal aufgetreten ist. Diese Möglichkeit wird im weiteren beschrieben.

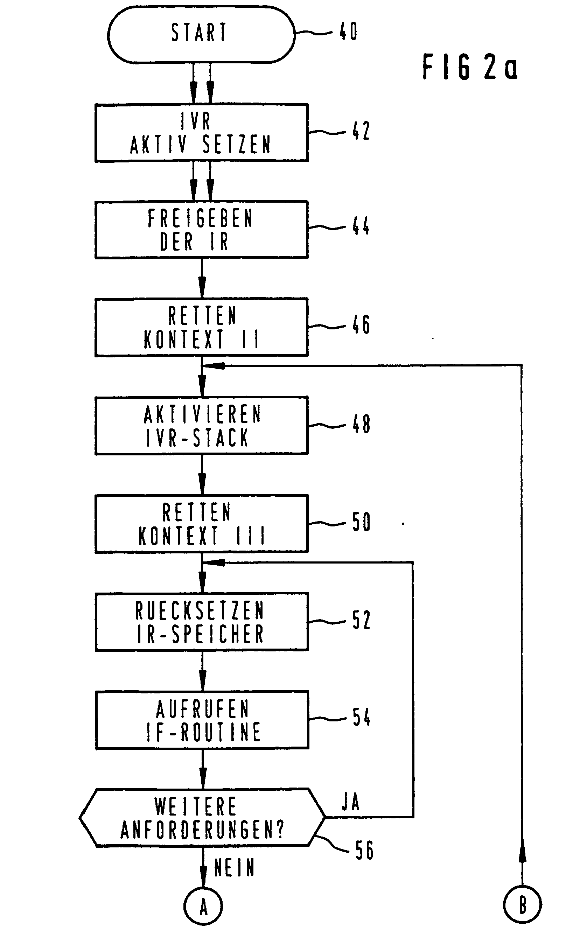

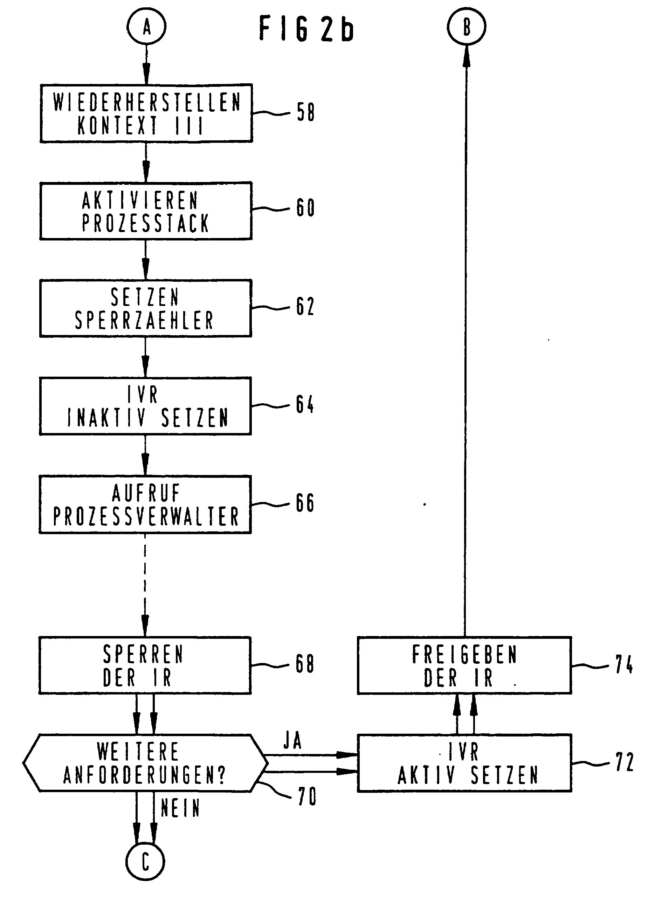

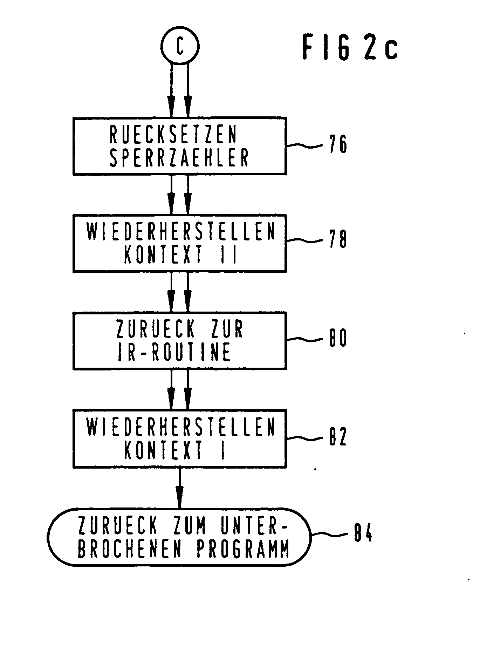

Der Mikroprozessor überprüft anschließend, ob zum Zeitpunkt des Auftretens des Interruptsignals Programmroutinen im Realzeit-Computersystem abgearbeitet werden, die zeitkritisch sind und deshalb nicht unterbrochen werden dürfen (Schritt 18). Die Anzahl solcher nicht unterbrechbaren Programme wird vom Mikroprozessor in einer Speicherzelle, z.B. in einem Sperrzähler mit einem bestimmten Anfangswert, gespeichert. Der Sperrzähler wird bei jedem Aufruf eines nicht unterbrechbaren Programms erhöht und nach dem Abarbeiten eines nicht unterbrechbaren Programms entsprechend erniedrigt. Der Mikroprozessor kann also im Verfahrensschritt 18 feststellen, ob zum momentanen Zeitpunkt nicht unterbrechbare Programme abgearbeitet werden. Ist dies nicht der Fall, d.h. hat die Speicherzelle des Sperrzählers den bestimmten Anfangswert, so prüft der Mikroprozessor, ob eine Interruptverwaltungsroutine (IVR) bereits aktiv ist, indem er eine Zustandsspeicherzelle, in welcher der Zustand der Interruptverwaltungsroutine abgespeichert ist, abfragt (Schritt 20). Ist die Interruptverwaltungsroutine nicht aktiviert, so wird sie aufgerufen (Schritt 22). Die Verfahrensschritte, die innerhalb der Interruptverwaltungsroutine auszuführen sind, werden weiter unten anhand der Figuren 2a, 2b und 2c erläutert.

Wird im Verfahrensschritt 18 festgestellt, daß der Inhalt des Sperrzählers von seinem Anfangswert abweicht, also eine nicht unterbrechbare Programmroutine aktiv ist, oder wird im Verfahrensschritt 20 anhand der Zustandspeicherzelle festgestellt, daß die Interruptverwaltungsroutine bereits aktiviert wurde, so erfolgt ein Rücksprung zur Interruptroutine (Schritt 24). In der Interruptroutine wird der Kontext I wiederhergestellt, indem aus dem Stapelspeicher die Daten für die Prozessorregister in zur Abspeicherung umgekehrter Reihenfolge wieder gelesen werden (Schritt 26). Danach erfolgt die Freigabe der Annahme weiterer Interruptsignale und es wird zum beim Auftreten des Interrupts unterbrochenen Programm zurückgekehrt, um es weiter abzuarbeiten (Schritt 28).

Bis auf den letzten Verfahrensschritt 28 werden alle Verfahrensschritte in der Figur 1 unter Wirksamkeit der Interruptsperre durchgeführt, so daß sich bislang noch kein wesentlicher Vorteil gegenüber dem Stand der Technik bezüglich der Interruptsperrzeit ergibt. Die Einsparung wird erst anhand der Verfahrensschritte nach den Figuren 2a, 2b, 2c ersichtlich, da bei dem dort gezeigten Verfahrensablauf der Großteil der Verfahrensschritte unter Freigabe der Annahme weiterer Interruptsignale durchgeführt wird.

Die Figuren 2a, 2b und 2c zeigen ein Flußdiagramm der Verfahrensschritte der Interruptverwaltungsroutine. Nachdem die Interruptverwaltungsroutine im Verfahrensschritt 22 aufgerufen worden ist, beginnt der Mikroprozessor mit der Abarbeitung der Verfahrensschritte der Interruptverwaltungsroutine (Schritt 40).

Danach wird die Zustandspeicherzelle gesetzt (Schritt 42). Damit kann beim Auftreten weiterer Interruptsignale im Verfahrensschritt 20 festgestellt werden, ob die Interruptverwaltungsroutine bereits aktiviert wurde, da sie bei ordnungsgemäßer Durchführung des Verfahrens nur einmal aktiviert werden darf.

Um die Interruptsperrzeit gegenüber bekannten Verfahren größtmöglichst zu verkürzen, wird sogleich die Annahme weiterer Interruptsignale freigegeben (Schritt 44). Nachdem der Verfahrensschritt 44 abgearbeitet worden ist, ist es also möglich, weitere Interruptsignale anzunehmen und zu bearbeiten. Diese weiteren Interruptsignale werden durch den Mikroprozessor als Daten in Form gesetzter Bits im Interruptspeicher im Verfahrensschritt 16 registriert. Beim anschließenden Fortsetzen des Abarbeitens der Verfahrensschritte in der Interruptverwaltungsroutine können diese weiteren Interruptsignale berücksichtigt werden.

Die Programmparameter des beim Auftreten des Interruptsignals unterbrochenen Programms, die noch nicht als Kontext I im Verfahrensschritt 12 gerettet wurden, werden in zwei Gruppen unterteilt. Eine Gruppe ist durch Programmparameter gebildet, die in einem dem unterbrochenen Programm zugeordneten Stapelspeicher für Programmparameter gerettet bzw. zwischengespeichert werden; diese Gruppe von Programmparametern wird im folgenden als Kontext II bezeichnet. Die weitere Gruppe von restlichen Programmparametern wird in einem der Interruptverwaltungsroutine zugeordneten Stapelspeicher für Programmparameter zwischengespeichert und im folgenden als Kontext III bezeichnet.

Durch diese Aufteilung der verbleibenden Programmparameter kann eine beträchtliche Speicherplatzersparnis erreicht werden, da der Kontext III nicht jeweils in dem Stapelspeicher des unterbrochenen Programms abgespeichert werden muß, sondern nur in dem Stapelspeicher der Interruptverwaltungsroutine.

Das Retten des Kontextes II (Schritt 46) erfolgt, wie erwähnt, in einen dem unterbrochenen Programm zugeordneten Stapelspeicher. Danach wird der Stapelspeicher der Interruptverwaltungsroutine aktiviert (Schritt 48) und es erfolgt ein Retten des Kontextes III in diesen Stapelspeicher (Schritt 50). Durch das Abspeichern der Programmparameter ist ein späteres Fortsetzen des beim Auftreten des Interruptsignals unterbrochenen Programms möglich. Das Rücksetzen des dem Interruptsignal zugeordneten Bits im Interruptspeicher, das beim Auftreten des Interruptes im Verfahrensschritt 16 gesetzt worden ist, erfolgt anschließend im Schritt 52. Dadurch ist es möglich, daß selbst das gleiche Interruptsignal wieder angenommen und ausgewertet werden kann, das durch die Interruptverwaltungsroutine gerade bearbeitet wird.

Nachdem nun alle Vorbereitungen für das Aufrufen einer Routine zum Bearbeiten des Interruptsignals abgeschlossen sind, wird die dem Interruptsignal entsprechende Bearbeitungsroutine aufgerufen (Schritt 54). Während des Abarbeitens der Bearbeitungsroutine können bereits weitere Interruptsignale angenommen worden sein, die dann durch Setzen entsprechender Bits im Interruptspeicher im Verfahrensschritt 16 vermerkt worden sind. Der Interruptspeicher wird nach dem Abarbeiten der Bearbeitungsroutine im Verfahrensschritt 54 vom Mikroprozessor nach gesetzten Bits abgefragt (Schritt 56). Sind derartige Bits im Interruptspeicher gesetzt, so wird das Verfahren im Verfahrensschritt 52 fortgesetzt. Das Verfahren befindet sich damit in einer Arbeitsschleife, die durch die Verfahrensschritte 52 bis 56 gebildet wird. Beim Abarbeiten der Arbeitsschleife können weitere Interruptsignale angenommen werden, die über den Interruptspeicher der Interruptverwaltungsroutine signalisiert werden und bei der Abfrage im Verfahrensschritt 56 berücksichtigt werden. Da das Bearbeiten der Interruptsignale im Gegensatz zu bekannten Verfahren unter Interruptfreigabe erfolgt, kann die Interruptsperrzeit beträchtlich verkürzt werden.

Es ist vorteilhaft, wenn die Abfrage nach gesetzten Bits im Interruptspeicher im Verfahrensschritt 56 eine Priorität der angenommenen Interruptsignale berücksichtigt. So können die einzelnen Bits des Interruptspeichers entsprechend einer Rangfolge im Speicherwort des Interruptspeichers z.B. jeweils von rechts nach links abgefragt werden, wodurch eine Priorität der einzelnen Bits festgelegt wird, die von rechts nach links im Speicherwort abnimmt.

Erst wenn alle gesetzten Bits im Interruptspeicher rückgesetzt sind (vgl. Verfahrensschritt 52) und die entsprechenden Bearbeitungsroutinen abgearbeitet worden sind (vgl. Verfahrensschritt 54), erfolgt die Fortsetzung des Verfahrens mit den Verfahrensschritten der Figur 2b. Es erfolgt das Wiederherstellen des Kontextes III (Schritt 58), indem aus dem der Interruptverwaltungsroutine zugeordneten Stapelspeicher die Programmparameter des Kontextes III in zur Abspeicherung umgekehrter Reihenfolge wieder gelesen werden.

Für den Aufruf der Interruptverwaltungsroutine gibt es zwei unterschiedliche Möglichkeiten. Die erste bereits beschriebene Möglichkeit ist der Aufruf gemäß Verfahrensschritt 22. In diesem Fall werden die Verfahrensschritte 24 bis 28 nicht abgearbeitet. Als zweite Möglichkeit kann die Interruptverwaltungsroutine über das Realzeit-Betriebssystem aufgerufen werden, wenn nicht unterbrechbare Programme beim Auftreten des Interruptsignals gerade abgearbeitet werden und damit der Sperrzähler im Verfahrensschritt 18 gesetzt war. Die Verfahrensschritte 24 bis 28 sind demzufolge wie oben erläutert bereits vor dem Aufruf der Interruptverwaltungsroutine durch das Realzeit-Betriebssystem ausgeführt worden und dürfen deshalb nicht innerhalb der Interruptverwaltungsroutine nochmals ausgeführt werden.

Der Aufruf der Interruptverwaltungsroutine über das Realzeit-Betriebssystem kann in der Weise erfolgen, daß nach dem Abarbeiten eines nicht unterbrechbaren Programms und nach Erniedrigen des Sperrzählers geprüft wird, ob der Sperrzähler den Anfangswert hat und im Interruptspeicher mindestens ein einem Interruptsignal zugeordnetes Bit gesetzt ist. Sind beide Bedingungen erfüllt, so wird die Interruptverwaltungsroutine aufgerufen.

Um die beiden Möglichkeiten zu unterscheiden und entsprechend bearbeiten zu können, kann nach dem Wiederherstellen des Kontextes III im Verfahrensschritt 58 ein einer Programmverwaltungsroutine zugeordneter Programmstapelspeicher (Programmstack) aktiviert werden, indem das Stackregister des Mikroprozessors mit der Adresse des Stapelspeichers des unterbrochenen Programms geladen wird (Schritt 60). Die Programmverwaltungsroutine ist Bestandteil des Realzeit-Betriebssystems und koordiniert das Abarbeiten von Programmen, indem abzuarbeitende Programme vemerkt werden und deren Abarbeiten in einer vorgegebenen Reihenfolge gestartet wird.

Danach erfolgt ein Erhöhen des Sperrzählers (Schritt 62), da die folgenden Verfahrensschritte 64 und 66 nicht unterbrochen werden dürfen. Anschließend wird die Interruptverwaltungsroutine z.B. durch Nullsetzen der Zustandsspeicherzelle als inaktiv gekennzeichnet (Schritt 64), um zu ermöglichen, daß die Interruptverwaltungsroutine erneut abgearbeitet werden kann.

Danach erfolgt ein Aufruf der Programmverwaltungsroutine (Schritt 66), die gegebenenfalls ein anderes Programm zum Ablauf bringt. Nach dessen Beendigung veranlaßt die Programmverwaltungsroutine ein Rückkehren in die Interruptverwaltungsroutine und ein Sperren der Annahme weiterer Interruptsignale (Schritt 68).

Da während des Abarbeitens der Verfahrensschritte 56 bis 68 weitere Interruptsignale angenommen worden sein können, die das Setzen zugeordneter Bits im Verfahrensschritt 16 im Interruptspeicher zur Folge haben, wird beim Abarbeiten der Interruptverwaltungsroutine vor deren Verlassen wiederum gefragt, ob noch Bits im Interruptspeicher gesetzt sind (Schritt 70). Ist dies der Fall, so wird die Interruptverwaltungsroutine nicht verlassen, sondern mit Hilfe der entsprechenden Zustandsspeicherzelle wieder aktiv gesetzt (Schritt 72) und es wird die Annahme weiterer Interruptsignale wieder freigegeben (Schritt 74). Danach wird das Verfahren im Verfahrensschritt 48 fortgesetzt. Die Interruptverwaltungsroutine befindet sich nunmehr in einer weiteren Arbeitsschleife, bestehend aus den Verfahrensschritten 48 bis 74. Diese weitere Arbeitsschleife kann nur im Verfahrensschritt 70 verlassen werden, wenn alle Bits im Interruptspeicher bereits rückgesetzt worden sind. In diesem Falle erfolgt ein Zurücksetzen des Sperrzählers, indem sein Wert entsprechend erniedrigt wird (Schritt 76).

Anschließend erfolgt ein Wiederherstellen des Kontextes II (Schritt 78), indem auf den Stapelspeicher des beim Auftreten des Interruptsignals unterbrochenen Programms umgeschaltet wird und die dort gespeicherten Programmparameter in zur Abspeicherung umgekehrter Reihenfolge wieder gelesen werden.

Im Schritt 80 erfolgt die Rückkehr zur Interruptroutine, in der dann der Kontext I wiederhergestellt wird (Schritt 82). Anschließend wird zum beim Auftreten des Interruptsignals unterbrochenen Programm zurückgekehrt (Schritt 84). Damit ist die Interruptverwaltungsroutine abgeschlossen.

## Patentansprüche

1. Verfahren zum Betreiben eines durch ein Realzeit-Betriebssystem gesteuerten Realzeit-Computersystems, welches Interruptsignale eines technischen Prozesses verarbeitet, bei dem die folgenden Schritte ausgeführt werden: beim Auftreten eines Interruptsignals unterbricht das Realzeit-Computersystem ein gerade abzuarbeitendes Programm (10),
die Annahme weiterer Interruptsignale wird gesperrt und eine zu diesem Interruptsignal gehörende Interruptroutine wird aufgerufen (10),
beim Abarbeiten dieser Interruptroutine wird ein erster Teil der Programmparameter (Kontext I) des beim Auftreten des Interruptsignals unterbrochenen Programms zwischengespeichert (12),
in einem Interruptspeicher wird zumindest ein Datum über das Interruptsignal abgespeichert (16),
aus der Interruptroutine wird zu einer Interruptverwaltungsroutine verzweigt (22),
wobei beim Abarbeiten der Interruptverwaltungsroutine die Annahme weiterer Interruptsignale wieder freigegeben wird (44),
beim Abarbeiten der Interruptverwaltungsroutine wird das zu dem Interruptsignal gehörende Datum im Interruptspeicher gelöscht (52),
der verbliebene Teil der Programmparameter (Kontext II und III) des beim Auftreten des Interruptsignals unterbrochenen Programms wird zwischengespeichert (46, 50),
abhängig vom Datum über das Interruptsignal im Interruptspeicher wird mindestens eine zu diesem Interruptsignal gehörende Reaktionsroutine aktiviert und gegebenenfalls unter Einschaltung des Realzeit-Betriebssystems abgearbeitet (54),
nach dem Abarbeiten der Interruptverwaltungsroutine verzweigt das Realzeit-Betriebssystem unter Verwendung der zwischengespeicherten Programmparameter (Kontext I bis III) zu dem beim Auftreten des Interruptsignals unterbrochenen Programm zurück (54, 58, 78, 82, 84).

2. Verfahren nach Anspruch 1, **dadurch gekennzeichnet, daß** die Freigabe (44) der Annahme weiterer Interruptsignale zu Beginn der Interruptverwaltungsroutine erfolgt.

3. Verfahren nach einem der Ansprüche 1 oder 2, **dadurch gekennzeichnet, daß** der erste Teil der Programmparameter (Kontext I) den Inhalt von Prozessorregistern zum Zeitpunkt der Unterbrechung eines durch das Realzeit-Betriebssystem gesteuerten Mikroprozessors umfaßt.

4. Verfahren nach einem der Ansprüche 1 bis 3, **dadurch gekennzeichnet, daß** der beim Abarbeiten der Interruptverwaltungsroutine zwischengespeicherte (46, 50) verbleibende Teil (Kontext II und III) der Programmparameter Informationen über den Zustand des beim Auftreten des Interruptsignals abgebrochenen Programms sowie Informationen enthält, die zur späteren Fortsetzung des unterbrochenen Programms wiederhergestellt werden müssen.

5. Verfahren nach Anspruch 1 bis 4, **dadurch gekennzeichnet, daß** das Speichern (46, 50) des verbliebenen Teils der Programmparameter (Kontext II und III) des beim Auftreten des Interruptsignals unterbrochenen Programms teilweise in einem dem unterbrochenen Programm zugeordneten ersten Stapelspeicher (Kontext II) für Programmparameter und teilweise in einem der Interruptverwaltungsroutine zugeordneten zweiten Stapelspeicher für Programmparameter (Kontext III) zwischengespeichert werden.

6. Verfahren nach einem der Ansprüche 1 bis 5, **dadurch gekennzeichnet, daß** bei mehreren nacheinander auftretenden Interruptsignalen zu diesen Interruptsignalen gehörende Daten im Interruptspeicher abgespeichert werden.

7. Verfahren nach Anspruch 6, **dadurch gekennzeichnet, daß** die Daten über aufgetretene Interruptsignale nach einer vorgegebenen Rangfolge abgespeichert werden, und daß das Abarbeiten der Interruptsignale durch die Interruptverwaltungsroutine abhängig von dieser Rangfolge erfolgt.

8. Verfahren nach einem der Ansprüche 1 bis 7, **dadurch gekennzeichnet, daß** während des Abarbeitens der Interruptverwaltungsroutine weitere Daten über Interruptsignale im Interruptspeicher abgespeichert werden, die während des Bearbeitens der Interruptverwaltungsroutine auftreten und daß die Interruptverwaltungsroutine erst dann beendet wird, wenn im Interruptspeicher keine Daten über Interruptsignale mehr gespeichert sind (70).

9. Verfahren nach einem der vorhergehenden Ansprüche, **dadurch gekennzeichnet, daß** das Verzweigen zu der Interruptverwaltungsroutine abhängig vom Wert eines Sperrzählers erfolgt, der die Aufrufe nicht unterbrechbarer Routinen des Realzeit-Betriebssystems zählt.

10. Verfahren nach Anspruch 9, **dadurch gekennzeichnet, daß** bei jedem Aufruf einer nicht unterbrechbaren Routine der Wert des Sperrzählers erhöht wird und nach dem Abarbeiten einer nicht unterbrechbaren Routine der Wert des Sperrzählers entsprechend erniedrigt wird.

11. Verfahren nach Anspruch 9 oder 10, **dadurch gekennzeichnet, daß** das Realzeit-Betriebssystem unter Verwendung (26) der zwischengespeicherten Programmparameter (Kontext I bis III) zu dem beim Auftreten des Interruptsignals unterbrochenen Programm zurückverzweigt (28), bevor die Interruptverwaltungsroutine abgearbeitet wird, wenn der Sperrzähler nicht einen vorbestimmten Anfangswert hat oder die Interruptverwaltungsroutine noch nicht vollständig abgearbeitet ist (20).

12. Verfahren nach einem der Ansprüche 9 bis 11, **dadurch gekennzeichnet, daß** das Verzweigen zur Interruptverwaltungsroutine dann erfolgt, wenn der Sperrzähler den vorbestimmten Anfangswert hat und im Interruptspeicher mindestens ein Datum über ein Interruptsignal gespeichert ist.

13. Verfahren nach einem der Ansprüche 5 bis 12, **dadurch gekennzeichnet, daß** ein Wiederherstellen (58) der auf dem der Interruptverwaltungsroutine zugeordneten zweiten Stapelspeicher zwischengespeicherten Programmparameter (Kontext III) erst erfolgt, wenn kein Datum im Interruptspeicher gespeichert ist (56).

14. Verfahren nach einem der Ansprüche 5 bis 13, **dadurch gekennzeichnet, daß** ein Wiederherstellen (78, 82) der auf dem dem unterbrochenen Programm zugeordneten ersten (Kontext I und II) Stapelspeicher zwischengespeicherten Programmparameter erst erfolgt, wenn kein Datum im Interruptspeicher gespeichert ist (70).

## Claims

1. Method of operating a real time computer system controlled by a real time operating system, which processes interrupt signals of a technical process, in which the following steps are executed:
On occurrence of an interrupt signal the real time computer system interrupts a program which is currently to be processed (10),
The acceptance of further interrupt signals is blocked and an interrupt routine belonging to this interrupt signal is called (10),
On processing of this interrupt routine a first part of the program parameters (context I) of the program interrupted on occurrence of the interrupt signal is buffered (12),
At least one item of data about the interrupt signal is stored in an interrupt memory (16),
A branch is made from the interrupt routine to an interrupt handling routine (22),
with, on processing of the interrupt handling routine, the acceptance of further interrupt signals being enabled again (44),
Once the interrupt handling routine has completed its processing the data item belonging to the interrupt signal is deleted in the interrupt memory (52),
The remaining part of the program parameters (context II and III) of the program interrupted on occurrence of the interrupt signal is buffered (46, 50),
Depending on the data item about the interrupt signal in the interrupt memory, at least one reaction routine belonging to this interrupt signal is activated and processed, with the involvement of the real time operating system if necessary; After the processing of the interrupt handling routine the real time operating system branches, using the buffered program parameters (context I to III) back to the program interrupted on occurrence of the interrupt signal (54, 58, 78, 82, 84).

2. Method in accordance with claim 1, **characterized in that** the acceptance of further interrupt signals is enabled (44) at the beginning of the interrupt handling routine.

3. Method in accordance with one of the claims 1 or 2, **characterized in that** the first part of the program parameters (context I) includes the contents of processor registers at the point in time at which a microprocessor controlled by a real time operating system was interrupted.

4. Method in accordance with one of the claims 1 to 3, **characterized in that** the remaining part (context II and III) of the program parameters buffered (46, 50) when the interrupt handling routine is processed contains information about the state of the program interrupted when the interrupt signal occurs as well as information which must be restored for subsequent continuation of the interrupted program.

5. Method in accordance with claim 1 or 4, **characterized in that** the storage (46, 50) of the remaining part of the program parameters (context II and III) of the program interrupted when the interrupt signal occurred is partly in a first stack (context II) for program parameters assigned to the first interrupted program and partly in a second stack for program parameters (context III) assigned to the interrupt handling routine.

6. Method in accordance with one of the claims 1 to 5, **characterized in that**, for a number of interrupt signals occurring consecutively, the data occurring for these interrupt signals is stored in the interrupt memory.

7. Method in accordance with claim 6, **characterized in that** the data about interrupt signals which have occurred is stored in accordance with a predetermined ranking and that the interrupt signals are processed by the interrupt handling routine depending on this ranking.

8. Method in accordance with one of the claims 1 to 7, **characterized in that**, during the processing of the interrupt handling routine, further data about interrupt signals occurring during the processing of the interrupt handling routine is stored in the interrupt memory and that the interrupt handling routine is only ended when data about interrupt signals is no longer stored in the interrupt memory (70).

9. Method in accordance with one of the previous claims, **characterized in that** branching to the interrupt handling routine is undertaken depending on the value of a blocking counter which counts the calls of the real time operating routines which cannot be interrupted.

10. Method in accordance with claim 9, **characterized in that**, each time a routine that cannot be interrupted is called, the value of the blocking counter is incremented, and is correspondingly decremented after a routine which cannot be interrupted has been processed.

11. Method in accordance with claim 9 or 10, **characterized in that** the real time operating system uses (26) the buffered program parameters (context I to III) to branch back (28) to the program interrupted when the interrupt signal occurs, before the interrupt handling routine is processed, if the blocking counter does not have a predetermined initial value or the interrupt handling routine is not yet completely processed (20).

12. Method in accordance with one of the claims 9 to 11, **characterized in that** the branch back to the interrupt handling routine is made if the blocking counter has a specific initial value and at least one data item about an interrupt signal is stored in the interrupt memory.

13. Method in accordance with one of the claims 5 to 12, **characterized in that** a restoration (58) of the program parameters (context III) buffered in the second program stack assigned to the interrupt handling routine only occurs if no data item is stored in the interrupt memory (56).

14. Method in accordance with one of the claims 5 to 13, **characterized in that** a restoration (78, 82) of the program parameters (context I and II) buffered in the first program stack assigned to the interrupted program only is only undertaken if no data item is stored in the interrupt memory (70) .

## Revendications

1. Procédé d'exploitation d'un système d'ordinateur en temps réel commandé par un système d'exploitation en temps réel, qui traite des signaux d'interruption d'un processus technique, dans lequel procédé les étapes suivantes sont exécutées:
à l'apparition d'un signal d'interruption, le système d'ordinateur en temps réel interrompt un programme qui doit justement se dérouler (10),
la réception d'autres signaux d'interruption est bloquée et une routine d'interruption associée à ce signal d'interruption est appelée (10),
lors du déroulement de cette routine d'interruption, une première partie des paramètres programme (contexte I) du programme interrompu à l'apparition du signal d'interruption est stockée temporairement (12),
au moins une donnée concernant le signal d'interruption est stockée dans une mémoire d'interruptions (16),
il y a branchement sur une routine de gestion d'interruption à partir de la routine d'interruption (22),
la réception d'autres signaux d'interruption étant, lors du déroulement de la routine de gestion d'interruption, de nouveau débloquée (44),
la donnée associée au signal d'interruption étant, lors du déroulement de la routine de gestion d'interruption, effacée dans la mémoire d'interruptions (52),
la partie restante des paramètres programme (contextes II et III) du programme interrompu à l'apparition du signal d'interruption étant stockée temporairement (46, 50),
au moins une routine de réaction associée à ce signal d'interruption étant activée en fonction de la donnée concernant le signal d'interruption dans la mémoire d'interruptions et, le cas échéant, se déroulant avec intervention du système d'exploitation en temps réel (54),
après le déroulement de la routine de gestion d'interruption, le système d'exploitation en temps réel se rebranchant sur le programme interrompu à l'apparition du signal d'interruption en utilisant des paramètres programme (contextes I à III) stockés temporairement (54, 58, 78, 82, 84).

2. Procédé selon la revendication 1, **caractérisé en ce que** le déblocage (44) de la réception d'autres signaux d'interruption se produit au début de la routine de gestion d'interruption.

3. Procédé selon l'une des revendications 1 ou 2, **caractérisé en ce que** la première partie des paramètres programme (contexte I) comprend le contenu de registres du processus à l'instant de l'interruption d'un microprocesseur commandé par le système d'exploitation en temps réel.

4. Procédé selon l'une des revendications 1 à 3, **caractérisé en ce que** la partie restante (contextes II et III) des paramètres programme, stockée temporairement lors du déroulement de la routine de gestion d'interruption (46, 50), contient des informations sur l'état du programme interrompu à l'apparition du signal d'interruption ainsi que des informations qui doivent être reconstituées pour la poursuite ultérieure du programme interrompu.

5. Procédé selon la revendication 1 à 4, **caractérisé en ce que** la partie restante des paramètres programme (contextes II et III) du programme interrompu à l'apparition du signal d'interruption est stockée temporairement (46, 50) en partie dans une première mémoire pile (contexte II) pour paramètres programme affectée deuxième mémoire pile pour paramètres programme au programme interrompu et en partie dans une (contexte III) affectée à la routine de gestion d'interruption.

6. Procédé selon l'une des revendications 1 à 5, **caractérisé en ce que**, dans le cas de plusieurs signaux d'interruption apparaissant successivement, des données associées à ces signaux d'interruption sont stockées dans la mémoire d'interruptions.

7. Procédé selon la revendication 6, **caractérisé en ce que** les données concernant des signaux d'interruption apparus sont stockées dans un ordre prédéfini et **en ce que** le déroulement des signaux d'interruption se fait par la routine de gestion d'interruption en fonction de cet ordre.

8. Procédé selon l'une des revendications 1 à 7, **caractérisé en ce que**, pendant le déroulement de la routine de gestion d'interruption, d'autres données concernant des signaux d'interruption sont stockées dans la mémoire d'interruptions, lesquelles apparaissent pendant le traitement de la routine de gestion d'interruption, et **en ce que** la routine de gestion d'interruption n'est terminée que lorsque plus aucune donnée concernant des signaux d'interruption n'est stockée dans la mémoire d'interruptions (70).

9. Procédé selon l'une des revendications précédentes, **caractérisé en ce que** le branchement sur la routine de gestion d'interruption se produit en fonction de la valeur d'un compteur de blocage qui compte les appels de routines non interruptibles du système d'exploitation en temps réel.

10. Procédé selon la revendication 9, **caractérisé en ce que**, à chaque appel d'une routine non interruptible, la valeur du compteur de blocage est augmentée et, après le déroulement d'une routine non interruptible, la valeur du compteur de blocage est réduite en conséquence.

11. Procédé selon la revendication 9 ou 10, **caractérisé en ce que** le système d'exploitation en temps réel, moyennant l'utilisation (26) des paramètres programme stockés temporairement (contextes I à III), se rebranche sur le programme interrompu à l'apparition du signal d'interruption (28) avant le déroulement de la routine de gestion d'interruption lorsque le compteur de blocage n'a pas une valeur initiale prédéterminée ou que la routine de gestion d'interruption ne s'est pas encore entièrement déroulée (20).

12. Procédé selon l'une des revendications 9 à 11, **caractérisé en ce que** le branchement sur la routine de gestion d'interruption se produit lorsque le compteur de blocage a la valeur initiale prédéterminée et qu'au moins une donnée concernant un signal d'interruption est stockée dans la mémoire d'interruptions.

13. Procédé selon l'une des revendications 5 à 12, **caractérisé en ce qu'**une reconstitution (58) des paramètres programme (contexte III) stockés temporairement sur la deuxième mémoire pile affectée à la routine de gestion d'interruption ne se produit que si aucune donnée n'est stockée dans la mémoire d'interruptions (56).

14. Procédé selon l'une des revendications 5 à 13, **caractérisé en ce qu'**une reconstitution (78, 82) des paramètres programme (contextes I et II) stockés temporairement sur la première mémoire pile affectée au programme interrompu ne se produit que si aucune donnée n'est stockée dans la mémoire d'interruptions (70).
